# EUROPÄISCHE PATENTSCHRIFT

(11) **EP 3 160 875 B1**
(45) Veröffentlichungstag und Bekanntmachung des Hinweises auf die Patenterteilung: **11.11.2020**
(21) Anmeldenummer: 14735908.7
(22) Anmeldetag: 30.06.2014
(51) Int. Cl.: B65G 21/20

(54) **VORRICHTUNG ZUM ABDICHTEN DER SEITENBEREICHE EINES FÖRDERBANDES UND FÖRDERBANDANLAGE MIT EINER SOLCHEN VORRICHTUNG**
DEVICE FOR SEALING THE SIDE REGIONS OF A CONVEYOR BELT, AND CONVEYOR BELT SYSTEM HAVING A DEVICE OF THIS TYPE
DISPOSITIF SERVANT À RENDRE ÉTANCHES DES ZONES LATÉRALES D'UN CONVOYEUR À BANDE ET INSTALLATION DE CONVOYEURS À BANDE

(43) Veröffentlichungstag der Anmeldung: 03.05.2017
(73) Patentinhaber: Scrapetec GmbH, 47475 Kamp-Lintfort (DE)
(72) Erfinder: DÜNNWALD, Wilfried, 47475 Kamp-Lintfort (DE)
(74) Vertreter: Cohausz & Florack
(86) Internationale Anmeldenummer: PCT/EP2014/063840
(87) Internationale Veröffentlichungsnummer: WO 2016/000742

(56) Entgegenhaltungen:
- EP-A1- 2 679 523
- EP-A1- 2 746 198
- DE-A1- 1 931 845
- US-A1- 2014 054 140

## Beschreibung

Die Erfindung betrifft eine Förderbandanlage mit einem Förderband und einer Vorrichtung zum Abdichten der Seitenbereiche des Förderbandes, wobei beidseitig der Längsachse des Förderbandes jeweils im Randbereich des Förderbandes eine Abfolge von mit Abstand zueinander angeordneten der Oberfläche des Förderbandes zugewandten Dichtelementen angeordnet sind, wobei die einzelnen Dichtelemente streifenförmig ausgebildet sind, im schrägen Winkel zur Längsachse des Förderbandes angeordnet sind und mit ihren inneren Ende in Laufrichtung des Förderbandes weisen, gemäß dem Oberbegriff des Anspruchs 1.

Eine derartige Vorrichtung ist aus der EP 2 679 523 A1 bekannt, in welcher der nächstliegende Stand der Technik gesehen werden kann.

Eine ähnliche Vorrichtung in Verbindung mit einer Übergabeschurre ist auch aus der JP 10152214 A bekannt. Soweit die unteren Kanten von Übergabeschurren für Förderbänder gegenüber den darunter liegenden Förderbändern abgedichtet werden müssen, um den Austritt von Fördergut und/oder von Staubfahnen zu vermeiden, ist in der JP 10152214 A ein Abdichtungssystem vorgeschlagen, welches aus an einer Seitenwange der Übergabeschurre federnd und schwenkbar aufgehängten Dichtelementen besteht. Die plattenartig ausgebildeten Dichtelemente liegen flächig auf der Oberfläche des gemuldeten Förderbandes auf, wobei in der Oberfläche der Dichtelemente nutartige Vertiefungen zum Anschluss von Verbindungsstangen ausgebildet sind. Damit soll erreicht werden, dass das auf dem Förderband liegende Material beim Transport nicht zur Seite hin von dem Förderband fallen kann.

Mit den bekannten Abdichtvorrichtungen ist der Nachteil verbunden, dass die Dichtelemente aufgrund des reibenden Kontaktes mit der Oberfläche des Förderbandes relativ schnell verschleißen und häufig erneuert werden müssen. Insbesondere kann sich aufgrund der federnden Auflage der Dichtelemente auf der Oberfläche des Förderbandes Material unter die Auflagerfläche der Dichtelemente schieben, welches dann aufgrund der Relativbewegung des Förderbandes zu den Dichtelementen unter den flächig aufliegenden Dichtelementen hindurch gerollt wird. Damit wird aufgrund der auftretenden Reibung die Oberfläche des Förderbandes und auch der Dichtelemente stark beansprucht. Zudem erhöht diese Reibung den Energiebedarf der Bandanlage.

Des Weiteren ist in der WO 91/09798 A eine Abdichtvorrichtung beschrieben, welche aus einer an der Außenseite der Seitenwange einer Übergabeschurre angebrachten Halteplatte und einem daran linear in Richtung auf das unter der Übergabeschurre laufende Förderband federnd beweglichen Dichtungselement besteht. Das aus einem flexiblen Material, insbesondere einem elastomeren Kunststoff bestehende, dichtlippenartig ausgebildete Dichtungselement liegt mit seiner vorderen Stirnkante auf der Oberfläche des gemuldeten Förderbandes auf. Mit dieser Abdichtvorrichtung ist der Nachteil verbunden, dass sich aufgrund der stirnseitigen Anlage des Dichtlippenelements an dem Förderband ein linienförmiger Kontakt zwischen dem Gurt des Förderbandes und dem Dichtungselement ergibt. Dieser linienförmige Kontakt führt häufig zu einer Riefenbildung in dem umlaufenden Förderband, weil sich schon bei einer beginnenden Riefenbildung Fördergut in den Riefen ablagert, welches im weiteren Betrieb zu einer Vertiefung der Riefen und gleichzeitig zu einem erhöhten Verschleiß des mit der so gebildeten Riefe zusammenwirkenden Dichtungselementes führt. Dies hat zur Folge, dass bei bereits ausgebildeten Riefen und zunehmendem Verschleiß des linienförmig anliegenden Dichtungselements eine ordnungsgemäße Abdichtung der Übergabe nicht mehr gewährleistet ist. Es kommt hinzu, dass derartige linienförmig arbeitende Dichtungssysteme aus Verschleißgründen häufiger nachgestellt werden müssen und insoweit nicht wartungsfrei sind.

Die US 2014/0054140 A1 offenbart eine Schleißbelaganordnung mit einem an der Innenseite einer Aufgabe- oder Übergabeschurre eines Schüttgutförderbandes montierten Schleißbelag. Diese Anordnung weist einen äußeren Nockenmechanismus auf, um die Höhe des Schleißbelages gegenüber der Oberfläche des Förderbandes einstellen zu können. Der Schleißbelag ist dabei vorzugsweise aus Edelstahl hergestellt. Alternativ kann er auch aus Keramik oder einem anderen geeigneten Material hergestellt sein.

Davon ausgehend lag der Erfindung die Aufgabe zugrunde, eine Förderbandanlage mit einem Förderband und einer Vorrichtung zum Abdichten der Seitenbereiche des Förderbandes der eingangs genannten Art zu schaffen, bei der die Vorrichtung einen geringen Verschleiß des Förderbandes und gleichzeitig gute Dichteigenschaften gewährleistet.

Gelöst wird diese Aufgabe durch eine Förderbandanlage mit den im Anspruch 1 angegebenen Merkmalen. Vorteilhafte Ausgestaltungen und Weiterbildungen der Erfindung sind in den Unteransprüchen angegeben.

Die Erfindung basiert auf der Idee, durch schrägstehende Leitleisten einen Staub- und Materialaustritt an den Seitenbereichen des Förderbandes zu verhindern, indem durch die schrägstehenden Leitleisten und das daran vorbeibewegte Förderband bzw. Fördergut (Fördermaterial) ein Luftsog von den Randbereichen des Förderbandes in Richtung Bandmitte bewirkt wird. Die Abdichtung der Seitenbereiche eines Förderbandes erfolgt dabei besonders gurtschonend, da die die äußeren Enden der Leitleisten verbindende Abschlussleiste mit geringem Abstand zu der Oberfläche des Förderbandes angeordnet ist, letztere also nicht oder im Wesentlichen nicht berührt. Erfindungsgemäß sind auch die Leitleisten mit geringem Abstand, also berührungsfrei oder im Wesentlichen berührungsfrei zu der Oberfläche des Förderbandes angeordnet. Die Leitleisten können aus Hartmetall oder flexiblem Material, beispielsweise aus Kunststoff gefertigt sein. Durch die schmale Auslegung der Leitleisten wird insbesondere dann, wenn sie aus flexiblem Material hergestellt sind, eine gurtschonende Flexibilität der Leitleisten ermöglicht.

Die Abschlussleiste ist aus einem gummielastischen Material hergestellt, wobei das gummielastische Material vorzugsweise eine Shore-Härte von weniger als 80 Shore-A, besonders bevorzugt weniger als 60 Shore-A aufweist.

Die Erfindung sieht somit zum Abdichten der Seitenbereiche eines Förderbandes vor, dass beidseitig der Längsachse des Förderbandes jeweils im Randbereich des Förderbandes eine Abfolge von mit Abstand zueinander angeordneten der Oberfläche des Förderbandes zugewandten Dichtelementen angeordnet sind, dass die einzelnen Dichtelemente streifenförmig ausgebildet sind, im schrägen Winkel zur Längsachse des Förderbandes angeordnet sind und mit ihren inneren Ende in Laufrichtung des Förderbandes weisen, dass die einzelnen Dichtelemente als schmale Leitleisten ausgebildet sind, indem das Verhältnis der Breite der jeweiligen Leitleiste zu dem Abstand von zwei der Leitleisten, die einen Zwischenraum begrenzen, größer als 1:3 ausgelegt ist, dass sich längs des jeweiligen Seitenrandes des Förderbandes eine Abschlussleiste erstreckt, welche die äußeren Enden der dort angeordneten Leitleisten verbindet, so dass der Zwischenraum zwischen den Leitleisten nach außen zum Randbereich des Förderbandes hin abgeschlossen ist, dass die Abschlussleiste mit Abstand im Bereich von 1,0 mm bis 10 mm, vorzugsweise im Bereich von 1,0 mm bis 6,0 mm zu der Oberfläche des Förderbandes schwebend über dem Förderband angeordnet ist, und dass die Abschlussleiste mit mindestens einem Einstellmittel zur Einstellung ihres Abstandes relativ zu der Oberfläche des Förderbandes versehen ist. Durch das oder die Einstellmittel ist eine zweckmäßige Einstellung des Abstandes der Abschlussleiste gegenüber der Oberfläche des Förderbandes möglich. Insbesondere können hierdurch Fertigungs- sowie Montagetoleranzen ausgeglichen bzw. behoben werden.

Zur Halterung der Leitleisten im Bereich eines abzudichtenden Förderbandes, insbesondere im Bereich einer Übergabeschurre, kann erfindungsgemäß vorgesehen sein, dass jeweils eine Mehrzahl von Leitleisten an einem an einer Seitenstruktur eines Förderergerüstes bzw. an einer Übergabeschurre gehalterten und sich entlang eines Randbereichs des Förderbandes erstreckenden Trägers befestigt ist. Die die äußeren Enden der Leitleisten verbindende Abschlussleiste steht gegenüber dem Träger in Richtung der Oberfläche des Förderbandes vor.

Soweit nach einem Ausführungsbeispiel der Erfindung vorgesehen ist, dass der streifenartig ausgebildete Träger aus einem flexiblem Material besteht, kann der Träger als ein dünner Gummi- oder Kunststoffgurt ausgebildet sein oder aus einem anderen geeigneten Gewebegurt bestehen. Soweit die vorzugsweise aus Hartmetall bzw. einem verschleißfesten Material bestehenden Leitleisten an einem derartigen Träger zu befestigen sind, kann vorgesehen sein, dass die Leitleisten an den flexiblen Träger geklebt, geschraubt, vulkanisiert oder mittels Verankerungselementen, die an den Leitleisten angebracht oder angeformt sind und durch das Material des Trägers umgossen sind, oder sonstwie in geeigneter Weise befestigt sind.

Nach einem Ausführungsbeispiel der Erfindung ist vorgesehen, dass der Träger mit den an ihm angebrachten Leitleisten mittels einer eine freie Beweglichkeit, beispielsweise Schwenkbarkeit ermöglichenden Verbindung an einem das Förderband tragenden Förderergerüst gehaltert ist, wobei im Einzelnen vorgesehen sein kann, dass der Träger von einem mit einer Seitenstruktur des Förderergerüsts verbundenen Halter getragen und beweglich an dem Halter gehaltert ist.

Die eine freie Beweglichkeit (z.B. Schwenkbarkeit) ermöglichende Verbindung kann dabei durch eine Umbiegung des entsprechend ausgewählten Materials von Träger und/oder Halter oder alternativ auch durch eine sogenannte Hakennaht zwischen den beiden vorgenannten Teilen gebildet sein. Die besagte Umbiegung ist vorzugsweise im Bereich einer als sogenanntes Filmscharnier dienenden Materialverdünnung (Materialreduzierung) ausgebildet. Bei einer starreren Ausbildung von Träger bzw. Halter kann auch die Anordnung eines Scharniers als Verbindung zwischen Halter und Träger vorgesehen sein.

Je nach Lage der Seitenstruktur des Förderergerüsts oder der Seitenwange einer Übergabeschurre in Bezug auf das darunter verlaufende Förderband kann nach einem Ausführungsbeispiel der Erfindung vorgesehen sein, dass der Halter an der oberhalb des Förderbandes mit Abstand zur Oberfläche des Förderbandes endenden Seitenstruktur bzw. Seitenwange befestigt ist und der Träger in einer in Richtung des äußeren Randes des Förderbandes zum Halter abgewinkelten Stellung ausgerichtet ist.

Hierbei kann zum Schutz der Verbindung zwischen der Seitenstruktur und dem Halter vorgesehen sein, dass die Seitenstruktur in Richtung des Förderbandes die Verbindung überragt und die Leitleisten in ihrer Längserstreckung bis an die Verbindung oder darüber hinaus bemessen sind.

Alternativ kann vorgesehen sein, dass der Halter an der oberhalb des gemuldeten Förderbandes endenden Seitenstruktur bzw. Seitenwange der Übergabeschurre befestigt ist und der Träger in einer in Richtung auf die Mitte des Förderbandes zum Halter abgewinkelten Stellung ausgerichtet ist. Ebenso zum Schutz der Verbindung zwischen Halter und Träger kann bei dieser Ausführungsform vorgesehen sein, dass an der Seitenstruktur innenseitig ein von der Seitenstruktur in Richtung auf den Träger gerichtetes Abdeckblech angebracht ist.

Eine vorteilhafte Ausgestaltung der Erfindung ist dadurch gekennzeichnet, dass das mindestens eine Einstellmittel als Spannband (Spanngurt) ausgeführt ist. Das Einstellmittel lässt sich so technisch zuverlässig und kostengünstig realisieren.

Nach einer weiteren vorteilhaften Ausgestaltung der Erfindung ist das mindestens eine Einstellmittel ein Einstellmittel zur stufenlosen Einstellung des Abstandes der Abschlussleiste relativ zu der Oberfläche des Förderbandes. In diesem Fall ist eine optimale Einstellung des Abstandes der Abschlussleiste gegenüber der Oberfläche des Förderbandes möglich.

Wie oben bereits erwähnt, sieht eine bevorzugte Ausgestaltung der Erfindung vor, dass die Leitleisten mit Abstand zu der Oberfläche des Förderbandes schwebend über dem Förderband angeordnet sind, wobei der Abstand im Bereich von 1,0 mm bis 10 mm, vorzugsweise im Bereich von 1,0 bis 6,0 mm liegt.

Eine weitere vorteilhafte Ausgestaltung der Erfindung ist dadurch gekennzeichnet, dass die Abschlussleiste eine Breite aufweist, die ein Vielfaches der Breite der jeweiligen Leitleiste beträgt. Diese Ausgestaltung wirkt sich im Hinblick auf ein mögliches Anschlagen des Förderbandes gegen die Abschlussleiste, zum Beispiel bei einem kurzfristigen Abheben des Förderbandes von den Tragrollen beim Anfahren des Förderbandes, gurtschonend aus.

Für eine einfache und schnelle Einstellung des Abstandes der Leitleisten gegenüber der Oberfläche des Förderbandes ist es günstig, wenn nach einer weiteren bevorzugten Ausgestaltung der Erfindung die dem Förderband zugewandten Längskanten der Leitleisten bündig mit der dem Förderband zugewandten Längskante der die äußeren Enden dieser Leitleisten verbindenden Abschlussleiste abschließen. In diesem Fall kann sich das Montagepersonal bei der Einstellung des Abstandes der Leitleisten gegenüber der Oberfläche des Förderbandes an der besser sichtbaren Abschlussleiste bzw. dem eingestellten Spalt zwischen Abschlussleiste und Förderband orientieren.

Eine weitere vorteilhafte Ausgestaltung der Erfindung sieht vor, dass die Leitleisten aus einem gummielastischen Material hergestellt sind, wobei das gummielastische Material vorzugsweise eine Shore-Härte von weniger als 80 Shore-A, besonders bevorzugt weniger als 60 Shore-A aufweist. Hierdurch wird die gurtschonende Eigenschaft der Vorrichtung zum Abdichten der Seitenbereiche des Förderbandes weiter verbessert. Ferner wird hierdurch die Umbiegekraft, die gegebenenfalls erforderlich ist, um den Träger der Leitleisten gegenüber dem Halter abzuwinkeln, reduziert.

Hinsichtlich einer Verwendung der Vorrichtung zum Abdichten der Seitenbereiche des Förderbandes in explosionsgefährdeten Einsatzbereichen ist es zweckmäßig, wenn das gummielastische Material der Leitleisten und/oder die Abschlussleisten nach einer weiteren Ausgestaltung der Erfindung antistatisch und/oder selbstverlöschend ausgeführt ist.

Eine weitere vorteilhafte Ausgestaltung der Erfindung ist dadurch gekennzeichnet, dass die Abschlussleiste mit mindestens einem länglichen, plastisch verformbaren Versteifungselement versehen ist. Ein solches Versteifungselement wirkt bei abschnittsweiser bzw. diskontinuierlicher Abspannung (Aufhängung) der Abschlussleiste einem Durchhang derselben entgegen. Andererseits ermöglicht das plastisch verformbare Versteifungselement aber auch, die Abschlussleiste an den Verlauf des Randbereichs des Förderbandes, insbesondere an einen leicht wellig verlaufenden Randbereich des Förderbandes konturparallel anzupassen. Das Versteifungselement ist hierzu vorzugsweise in die Abschlussleiste eingebettet oder in diese eingegossen.

Nachfolgend wird die Erfindung anhand einer ein Ausführungsbeispiel darstellenden Zeichnung näher erläutert. Es zeigen:
Fig. 1 ein Förderband in Querschnittansicht mit einer Abdichtvorrichtung einer erfindungsgemäßen Förderbandanlage;
Fig. 2 eine vergrößerte Darstellung des Details X aus der Fig. 1;
Fig. 3 einen Längsabschnitt des Förderbandes mit der Abdichtvorrichtung aus Fig. 1 in Draufsicht;
Fig. 4 zwei unterschiedliche Teile einer Abdichtvorrichtung einer erfindungsgemäßen Förderbandanlage für den rechten Seitenbereich und den linken Seitenbereich eines Förderbandes in Draufsicht; und
Fig. 5 den Längsabschnitt des Förderbandes mit geschnitten dargestellten Abschnitten der Abdichtvorrichtung aus Fig. 1 bzw. Fig. 3 in Draufsicht.

Ein Förderband 1 liegt in einer nicht weiter dargestellten Weise auf Tragrollen 2 eines Traggerüstes. Die Rollen 2 sind in Rollenböcken 3 gelagert, die an Tragholmen (Längsträgern) des Traggerüstes befestigt sind. Das Traggerüst ist mit einer Seitenstruktur 4 versehen, die plattenförmige Seitenwände aufweist. Alternativ kann es sich bei der Seitenstruktur 4 bzw. den Seitenwänden auch um die Seitenwangen einer Übergabeschurre handeln, unter der das Förderband 1 mit Abstand verläuft.

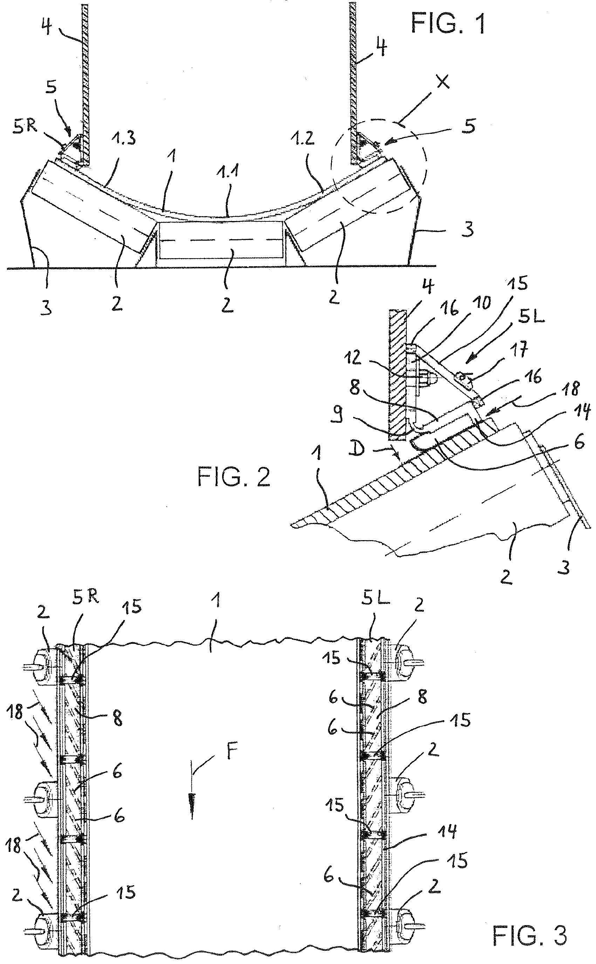

In Fig. 1 ist ein Rollenbock 3 für das Obertrum des Förderbandes 1 skizziert. Der Rollenbock 3 ist so ausgebildet, dass die darin gelagerten Tragrollen 2 muldenförmig angeordnet sind bzw. dem Förderband 1 eine muldenförmige Querschnittsform verleihen. Hierzu tragen die Rollenböcke 3 des Obertrums drei Rollen 2. Alternativ könnten die Rollenböcke des Obertrums aber auch nur jeweils zwei V-förmig angeordnete Tragrollen 2 aufweisen, um dem Förderband 1 eine muldenförmige Querschnittsform zu verleihen. Die Seitenbereiche 1.2, 1.3 des Förderbandes 1 verlaufen somit von dessen Mittenbereich 1.1 ausgehend schräg ansteigend zu den Bandkanten.

Das Förderband 1 kann auch mit einem Tisch (nicht gezeigt), insbesondere einem sogenannten Pralltisch versehen sein, der das Förderband 1 vor übermäßigem Verschleiß oder Beschädigung durch das darauf im Bereich einer Übergabeschurre oder Fördergutaufgabe aufprallende Fördergut schützt. Im Bereich des Tisches bzw. Pralltisches kann das Förderband 1 gemuldet oder ohne Muldung geführt sein.

Zur Abdichtung der Seitenbereiche 1.2, 1.3 des Förderbandes 1 zwischen dem unteren Ende der Seitenwände (Seitenwangen) 4 und der Oberfläche des Förderbandes 1 ist an den Seitenwänden eine Abdichtvorrichtung 5 vorgesehen. Die Abdichtvorrichtung 5 umfasst in diesem Ausführungsbeispiel ein rechtes Teil 5R, das für den in Laufrichtung F des Förderbandes gesehen rechten Seitenbereich 1.2 bestimmt ist, und ein linkes Teil 5L, das für den linken Seitenbereich 1.3 eines Förderbandes 1 bestimmt ist (vgl. Figuren 1, 3 und 4). Die beiden Teile 5R, 5L weisen prinzipiell den gleichen technischen Aufbau auf, sie unterscheiden sich jedoch hinsichtlich der Schrägstellung ihrer Leitleisten 6 in Bezug auf die Laufrichtung F des Förderbandes 1. Zur funktionsgerechten Anordnung der beiden Teile 5R, 5L ist daher auf dem jeweiligen Teil ein Hinweis, z.B. ein Pfeil 7 oder dergleichen angebracht, der in Bezug auf die Laufrichtung F des Förderbandes 1 den jeweiligen Seitenbereich 1.2 oder 1.3 des Förderbandes 1 angibt, an welchem das Teil 5R oder 5L der Abdichtvorrichtung 5 zu montieren ist.

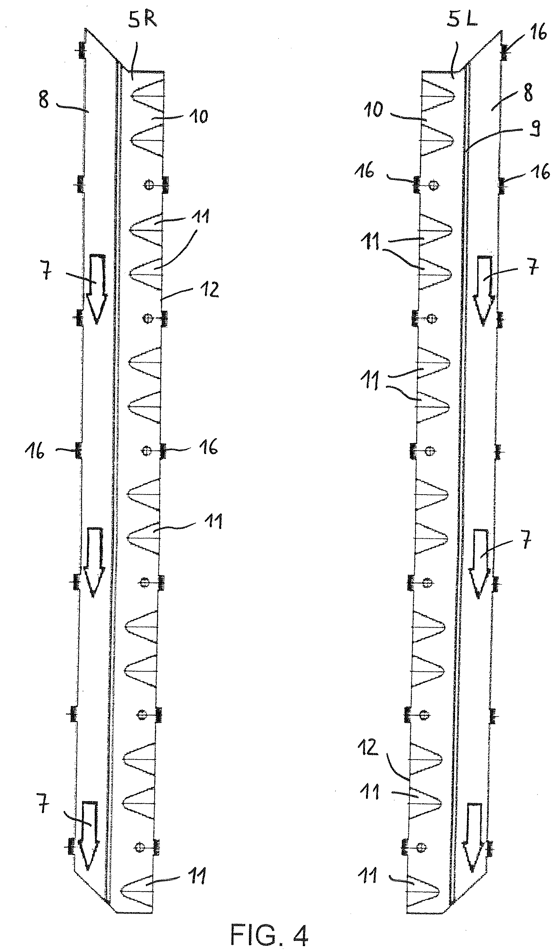

Das rechte Teil 5R sowie das linke Teil 5L der Abdichtvorrichtung 5 weisen jeweils einen sich in Längsrichtung des Förderbandes 1 über eine vorgegebene Länge streckenden streifenförmigen Träger 8 auf, der mittels einer Verbindung 9 an dem unteren Ende eines auf der Außenseite der Seitenwand 4 angebrachten Halters 10 derart gehaltert ist, dass der streifenförmige Träger 8 relativ zu dem Halter 10 bzw. der Seitenwand 4 schwenkbar ist. Soweit der Halter 10 und/oder der Träger 8 aus einem flexiblen oder dünnwandigen Material, beispielsweise aus Gummi oder einem geeigneten Kunststoff, hergestellt sind, kann die Verbindung 9 durch eine Umbiegung des entsprechend ausgewählten Materials von Träger 8 und/oder Halter 10 gebildet sein. In dem Halter 10 sind mehrere Vertiefungen (Materialaussparungen) 11 ausgebildet, die jeweils eine gegenüber der Außenseite des Halters 10 zurückliegende Grundfläche aufweisen, welche sich bis zu der dem Träger 8 abgewandten Längskante 12 des Halters 10 erstreckt (vgl. Fig. 4). Die jeweilige Vertiefung 11 bzw. Grundfläche weist vorzugsweise eine im Wesenlichen parabelförmige Kontur auf. Durch diese Vertiefungen 11 wird die Flexibilität des Halters 10 erhöht, so dass derselbe besser an den Verlauf des Förderbandes 1, welches zumindest bereichsweise, insbesondere im Bereich seiner Seitenbereiche 1.2, 1.3, in Laufrichtung F einen bogen- oder wellenförmigen Verlauf aufweisen kann, angepasst werden kann.

In dem dargestellten Ausführungsbeispiel ist die Verbindung 9, mittels welcher der streifenförmige Träger 8 an dem unteren Ende des Halters 10 schwenkbar angebunden ist, durch eine Materialverdünnung nach Art eines sogenannten Filmscharniers ausgebildet. Die Halter 10 sind beispielsweise durch Schraubverbindungen 12 mit den Seitenwänden 4 lösbar verbunden. Alternativ oder ergänzend können auch Klemmhalter verwendet werden, um die Halter 10 bzw. die Abdichtvorrichtung 5 an der betreffenden Bandanlage zu befestigen.

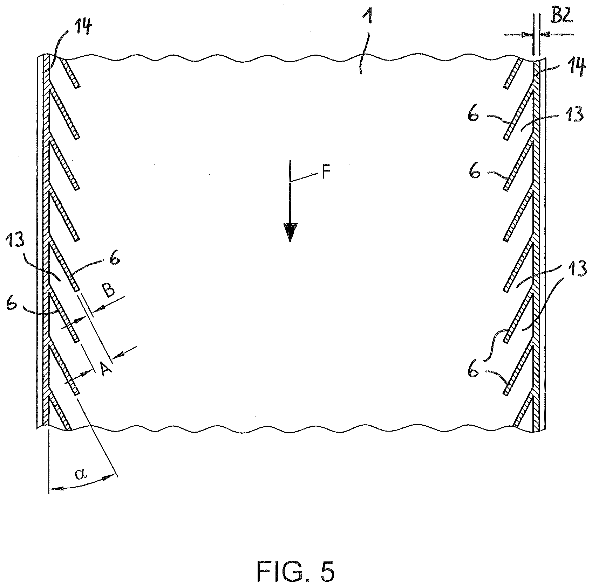

An der dem Förderband 1 zugewandten Unterseite des streifenförmigen Trägers 8 sind Leitleisten 6 angebracht. Die Leitleisten 6 sind lamellenförmig ausgebildet und zueinander beabstandet, so dass sie zwischen sich Zwischenräume 13 begrenzen, und schräg zur Längsachse bzw. Laufrichtung F des Förderbandes 1 angeordnet. Die Schrägstellung der Leitleisten 6 lässt sich in den Figuren 3 und 5 erkennen. Die Leitleisten (Lamellen) 6 stehen gegenüber der Unterseite des streifenförmigen Trägers 8 in einem Winkel ab, der zum Beispiel in einem Bereich von 80° bis 100° liegt.

In Fig. 5 ist die Breite einer einzelnen Leitleiste 6 mit B bezeichnet, während der lichte Abstand zweier Leitleisten 6 mit A bezeichnet ist. Das Verhältnis der Breite B einer einzelnen Leitleiste 6 zu dem lichten Abstand A zweier benachbarter Leitleisten 6, die einen Zwischenraum 13 begrenzen, ist größer als 1:3 ausgelegt. Der lichte Abstand A zweier benachbarter Leitleisten 6 beträgt somit ein Mehrfaches der Breite B der jeweiligen Leitleiste 6. Beträgt die Breite B der einzelnen Leitleiste 6 beispielsweise 5 mm, so soll der lichte Abstand A zweier benachbarter Leitleisten 6 mindestens 15 mm betragen. Zweckmäßig ist aber ein größerer lichter Abstand A, beispielsweise in der Größenordnung von 100 mm. Vorzugsweise liegt die Breite B der einzelnen Leiste 6 im Bereich von 3 mm bis 5 mm, während der lichte Abstand A zweier benachbarter Leitleisten 6 im Bereich von 3 cm bis 10 cm liegt.

In Fig. 5 ist zu erkennen, dass die einzelnen Leitleisten 6 mit dem äußeren Rand des Förderbandes 1 bzw. des Trägers 8 einen schrägen Winkel α einschließen. In dem dargestellten Ausführungsbeispiel beträgt der Winkel α etwa 30°. Der Winkel α kann allerdings auch kleiner oder größer gewählt werden; vorzugsweise liegt er zwischen 15° und 45°.

Mit dieser sowohl schräg zur Längsachse des Förderbandes 1 als auch in Richtung der Förderrichtung F des Förderbandes 1 ausgerichteten Stellung wird erreicht, dass einerseits von dem Förderband 1 bis in die Zwischenräume 13 zwischen die Leitleisten 6 gelangendes Fördergut bzw. dorthin gelangender Staub in Richtung auf das Förderband 1 wieder zurückgeführt wird. Entsprechendes gilt auch für Fördergut, welches bei bestimmten Betriebsbedingungen unter eine Leitleiste 6 bzw. eine an einem Träger 8 befestigte Gruppe von Leitleisten 6 gelangt ist. Dieses Material wird nicht über die Länge der gesamten Abdichtvorrichtung 5 unter den Leitleisten 6 hindurchgerollt, sondern nach Eintreten in einen zwischen zwei Leitleisten 6 bestehenden Zwischenraum 13 von der in Förderrichtung F nachfolgenden Leitleiste 6 wieder in Richtung auf die Mitte des Förderbandes 1 zurückgeführt. Um einen Austritt von in die Zwischenräume 13 gelangtem Fördergut über die Seitenränder 1.2, 1.3 des Förderbandes 1 zu verhindern, sind die äußeren Enden der Leitleisten 6 mittels einer sich im Wesentlichen parallel zu dem äußeren Rand des Förderbandes 1 erstreckenden Abschlussleiste 14 miteinander verbunden, so dass insoweit die Zwischenräume 13 nach außen abgeschlossen sind.

Die jeweilige Abschlussleiste 14 ist mit Einstellmitteln 15 zur Einstellung ihres Abstandes relativ zu der Oberfläche des Förderbandes 1 versehen. Hierzu sind an dem Träger 8 oder der Außenseite der Abschlussleiste 14 sowie an dem Halter 10 zum Beispiel Spannbänder (Spanngurte) oder dergleichen angebracht. Zur Festlegung der Spannbänder 15 dienen Ösen, Schlaufen 16 oder dergleichen, die an dem Träger 8 oder der Außenseite der Abschlussleiste 14 und an dem Halter 10 befestigt oder angeformt sind. Jedes der Spannbänder 15 weist einen Verschluss 17 auf. Der Verschluss 17, der auch als Spannschloss bezeichnet werden kann, weist einen Umlenksteg und eine Klemmbacke auf. Die Klemmbacke wird durch eine Feder auf den Steg gedrückt. In eine Richtung lässt sich das Spannband 15 durch den Verschluss 17 durchziehen, in die andere Richtung wird es durch die Klemmbacke blockiert.

Mittels der Einstellmittel bzw. Spannbänder 15 werden die Abschlussleisten 14 mit geringem Abstand zu der Oberfläche des Förderbandes 1 angeordnet, sodass eine Luftströmung in die Zwischenräume 13 zwischen die Leitleisten 6 möglich ist. Der Abstand der Abschlussleisten zu der Oberfläche des Förderbandes soll hierzu im Bereich von 1,0 - 10 mm, vorzugsweise im Bereich von 1,0 - 6,0 mm liegen. Durch die Bewegung des Förderbandes 1 entsteht ein Sog, und damit wird zwischen den Leitleisten 6 eine Luftströmung in Richtung auf das Förderband 1 zu bewirkt, die einerseits eine Sperre für das Austreten von Fördergut und/oder Staub aus dem abgedichteten Förderbandbereich bzw. Übergabebereich darstellt und andererseits die Rückführung von Fördergut und/oder Staub auf das Förderband 1 unterstützt. Ein beladenes Förderband 1 vergrößert diese Wirkung. Der entstehende Sog beruht auf dem sogenannten Venturi-Effekt.

Die Abschlussleiten 14 und vorzugsweise die Leitleisten 6 sind aus gummielastischem Material hergestellt, welches vorzugsweise eine Shore-Härte von weniger als 80 Shore-A, besonders bevorzugt von weniger als 60 Shore-A aufweist. Das gummielastische Material enthält Zusätze, die ihm antistatische und/oder selbstverlöschende Eigenschaften verleihen.

Erfindungsgemäß sind die Leitleisten 6 in Bezug auf die Abschlussleisten 14 so bemessen, dass auch sie mit geringem Abstand zu der Oberfläche des Förderbandes 1 schwebend über dem Förderband 1 angeordnet sind. Der geringe Abstand der Abschlussleisten 14 sowie der Leitleisten 6 zu der Oberfläche des Förderbandes ist in Fig. 2 durch den Pfeil D angedeutet. Der durch die Bewegung des laufenden Förderbandes 1 erzeugte Luftsog in Richtung auf das Förderband 1 ist in den Figuren 2 und 3 durch Pfeile 18 angedeutet, die der Einfachheit halber nur auf der linken Seite des Förderbandes 1 eingezeichnet sind. Der Abstand D der Leitleisten 6 zu der Oberfläche des Förderbandes 1 liegt beispielsweise im Bereich von 1,0 - 10 mm, vorzugsweise im Bereich von 1,0 - 6,0 mm. Die dem Förderband 1 zugewandte Längskante der Abschlussleiste 14 schließt vorzugsweise im Wesentlichen bündig mit den dem Förderband 1 zugewandten Längskanten der durch die Abschlussleiste 14 verbundenen Leitleisten 6 ab. Das heißt, die dem Förderband 1 zugewandte Längskante der Abschlussleiste 14 und die dem Förderband zugewandten Längskanten der durch die Abschlussleiste 14 verbundenen Leitleisten 6 enden im Wesentlichen in einer Fläche. Alternativ können die dem Förderband 1 zugewandten Längskanten der durch die Abschlussleiste 14 verbundenen Leitleisten 6 aber auch ein wenig gegenüber der dem Förderband 1 zugewandten Längskante der Abschlussleiste 14 vorstehen.

Die Abschlussleiste 14 ist deutlich breiter ausgebildet als die jeweilige Leitleiste (Lamelle) 6. Die Breite B2 der Abschlussleiste 14 kann beispielsweise im Bereich von 10 mm bis 30 mm liegen, während die einzelne Leitleiste 6 eine Breite B von zum Beispiel 3 bis 5 mm aufweist.

Die Abschlussleiste 14 weist parallel zu ihrer Längsachse mindestens ein längliches, plastisch verformbares Versteifungselement auf. Das Versteifungselement (nicht gezeigt) verhindert einen Durchhang der Abschlussleiste 14 bzw. des Trägers 8 und ist in die Abschlussleiste 14 eingebettet oder eingegossen. Das Versteifungselement kann beispielsweise aus einer metallischen Stange, insbesondere einem Rundstab bestehen.

Die rechtsseitigen und linksseitigen Teile 5R, 5L der Abdichtvorrichtung 5 können in einer vorgegebenen Länge, z.B. in einer Länge von 2 m zur Verfügung gestellt und mittels eines geeigneten Schneidwerkzeugs beliebig gekürzt oder durch Aneinandersetzen baugleicher Teile beliebig verlängert werden. Das vorstehend beschriebene Ausführungsbeispiel verdeutlicht, dass die Erfindung folgende Vorteile bietet:
- Staub- und Explosionsschutz
- Durch die schrägstehenden Leitleisten (Lamellen) wird Luft zur Bandmitte geleitet; durch diesen Luftsog, die schrägstehenden Leitleisten und die Abschlussleisten wird ein Staub- und Materialaustritt an den Seitenrändern des Förderbandes verhindert
- Die Abdichtvorrichtung ist im Wesentlichen wartungsfrei
- Die Abdichtvorrichtung lässt sich einfach montieren
- Durch die schwebende Anordnung der Abschlussleisten sowie der Leitleisten ergibt sich eine besonders gurtschonende Abdichtung; keine Gurtschädigung (Riefenbildung)
- Bei bestimmungsgemäßen Gebrauch ist die Abdichtvorrichtung verschleißfrei
- Die Abdichtvorrichtung lässt sich beliebig kürzen und verlängern
- Die schwebende Anordnung der Abschlussleisten sowie der Leitleisten wirkt sich energiesparend auf den Betrieb der Bandanlage aus
- Die Abdichtvorrichtung kann gegebenenfalls einen Wellkantengurt ersetzen

Die Ausführung der Erfindung ist nicht auf das in der Zeichnung dargestellte Ausführungsbeispiel beschränkt. Vielmehr sind zahlreiche Varianten denkbar, die auch bei einer von diesem Beispiel abweichenden Ausgestaltung von der in den beiliegenden Ansprüchen angegebenen Erfindung Gebrauch machen.

## Patentansprüche

1. Förderbandanlage mit einem Förderband (1) und einer Vorrichtung zum Abdichten der Seitenbereiche (1.2, 1.3) des Förderbandes (1), wobei beidseitig der Längsachse des Förderbandes jeweils im Randbereich des Förderbandes eine Abfolge von mit Abstand (A) zueinander angeordneten der Oberfläche des Förderbandes (1) zugewandten Dichtelementen angeordnet sind, wobei die einzelnen Dichtelemente streifenförmig ausgebildet sind, im schrägen Winkel zur Längsachse des Förderbandes angeordnet sind und mit ihren inneren Ende in Laufrichtung (F) des Förderbandes weisen, wobei die einzelnen Dichtelemente als schmale Leitleisten (6) ausgebildet sind, indem das Verhältnis der Breite (B) der jeweiligen Leitleiste (6) zu dem Abstand (A) von zwei der Leitleisten (6), die einen Zwischenraum (13) begrenzen, größer als 1:3 ausgelegt ist, wobei sich längs des jeweiligen Seitenrandes des Förderbandes (1) eine Abschlussleiste (14) erstreckt, welche die äußeren Enden der dort angeordneten Leitleisten (6) verbindet, so dass der Zwischenraum (13) zwischen den Leitleisten (6) nach außen zum Randbereich des Förderbandes hin abgeschlossen ist, **dadurch gekennzeichnet, dass** die Abschlussleiste (14) aus einem gummielastischen Material hergestellt ist und mit mindestens einem Einstellmittel (15) zur Einstellung ihres Abstandes (D) relativ zu der Oberfläche des Förderbandes (1) versehen ist, so dass die Abschlussleiste (14) mit Abstand im Bereich von 1,0 mm bis 10 mm zu der Oberfläche des Förderbandes (1) schwebend über dem Förderband (1) anordenbar ist, wobei die Leitleisten (6) in Bezug auf die Abschlussleisten (14) so bemessen sind, dass auch sie mit geringem Abstand zu der Oberfläche des Förderbandes (1) schwebend über dem Förderband (1) anordenbar sind.

2. Förderbandanlage nach Anspruch 1, **dadurch gekennzeichnet, dass** das Einstellmittel (15) als Spannband ausgeführt ist.

3. Förderbandanlage nach Anspruch 1 oder 2, **dadurch gekennzeichnet, dass** das Einstellmittel (15) ein Einstellmittel zur stufenlosen Einstellung des Abstandes (D) der Abschlussleiste (14) relativ zu der Oberfläche des Förderbandes (1) ist.

4. Förderbandanlage nach einem der Ansprüche 1 bis 3, **dadurch gekennzeichnet, dass** die Leitleisten (6) mit Abstand (D) im Bereich von 1,0 mm bis 10 mm zu der Oberfläche des Förderbandes (1) schwebend über dem Förderband (1) angeordnet sind.

5. Förderbandanlage nach einem der Ansprüche 1 bis 4, **dadurch gekennzeichnet, dass** die Abschlussleiste (14) eine Breite (B2) aufweist, die ein Vielfaches der Breite (B) der jeweiligen Leitleiste (6) beträgt.

6. Förderbandanlage nach einem der Ansprüche 1 bis 5, **dadurch gekennzeichnet, dass** die dem Förderband (1) zugewandten Längskanten der Leitleisten (6) bündig mit der dem Förderband (1) zugewandten Längskante der die äußeren Enden dieser Leitleisten (6) verbindenden Abschlussleiste (14) abschließen.

7. Förderbandanlage nach einem der Ansprüche 1 bis 6, **dadurch gekennzeichnet, dass** die Leitleisten (6) aus einem gummielastischen Material hergestellt sind.

8. Förderbandanlage nach Anspruch 1 oder 7, **dadurch gekennzeichnet, dass** das gummielastische Material eine Shore-Härte von weniger als 80 Shore-A, vorzugsweise weniger als 60 Shore-A aufweist.

9. Förderbandanlage nach Anspruch 1, 7 oder 8, **dadurch gekennzeichnet, dass** das gummielastische Material antistatisch und/oder selbstverlöschend ausgeführt ist.

10. Förderbandanlage nach einem der Ansprüche 1 bis 9, **dadurch gekennzeichnet, dass** die Abschlussleiste (14) mit mindestens einem länglichen, plastisch verformbaren Versteifungselement versehen ist.

11. Förderbandanlage nach Anspruch 10, **dadurch gekennzeichnet, dass** das Versteifungselement in die Abschlussleiste (14) eingebettet oder eingegossen ist.

## Claims

1. Conveyor belt system having a conveyor belt (1) and a device for sealing the side regions (1.2, 1. 3) of the conveyor belt (1), a series of sealing elements arranged at a distance (A) from one another and facing the surface of the conveyor belt (1) being arranged on both sides of the longitudinal axis of the conveyor belt in each case in the edge region of the conveyor belt, the individual sealing elements being designed in the form of strips, are arranged at an oblique angle to the longitudinal axis of the conveyor belt and point with their inner ends in the running direction (F) of the conveyor belt, the individual sealing elements being designed as narrow guide strips (6), in that the ratio of the width (B) of the respective guide strip (6) to the distance (A) between two of the guide strips (6) which define an intermediate space (13) is greater than 1: 3, wherein an end strip (14) extends along the respective lateral edge of the conveyor belt (1), which end strip (14) connects the outer ends of the guide strips (6) arranged there, so that the intermediate space (13) between the guide strips (6) is closed off outwards towards the edge region of the conveyor belt, **characterised in that** the end strip (14) is made of a rubber-elastic material and is provided with at least one adjusting means (15) for adjusting its distance (D) relative to the surface of the conveyor belt (1), so that the end strip (14) can be arranged floating above the conveyor belt (1) at a distance in the range from 1.0 mm to 10 mm from the surface of the conveyor belt (1), wherein the guide strips (6) are dimensioned with respect to the end strips (14) so that they can also be arranged floating above the conveyor belt (1) at a small distance from the surface of the conveyor belt (1).

2. Conveyor belt system according to claim 1, **characterised in that** the adjusting means (15) is designed as a tensioning belt.

3. Conveyor belt system according to claim 1 or 2, **characterised in that** the adjusting means (15) is an adjusting means for the infinitely variable adjustment of the distance (D) of the end strip (14) relative to the surface of the conveyor belt (1).

4. Conveyor belt system according to one of claims 1 to 3, **characterised in that** the guide strips (6) are arranged floating above the conveyor belt (1) at a distance (D) in the range of 1.0 mm to 10 mm from the surface of the conveyor belt (1).

5. Conveyor belt system according to one of claims 1 to 4, **characterised in that** the end strip (14) has a width (B2) which is a multiple of the width (B) of the respective guide strip (6).

6. Conveyor belt system according to one of claims 1 to 5, **characterised in that** the longitudinal edges of the guide strips (6) facing the conveyor belt (1) terminate flush with the longitudinal edge of the end strip (14) facing the conveyor belt (1) and connecting the outer ends of these guide strips (6).

7. Conveyor belt system according to one of claims 1 to 6, **characterised in that** the guide strips (6) are made of a rubber-elastic material.

8. Conveyor belt system according to claim 1 or 7, **characterised in that** the rubber-elastic material has a Shore hardness of less than 80 Shore-A, preferably less than 60 Shore-A.

9. Conveyor belt system according to claim 1, 7 or 8, **characterized in that** the rubber-elastic material is designed to be antistatic and/or self-extinguishing.

10. Conveyor belt system according to one of claims 1 to 9, **characterised in that** the end strip (14) is provided with at least one elongated, plastically deformable stiffening element.

11. Conveyor belt system according to claim 10, **characterized in that** the stiffening element is embedded or cast into the end strip (14).

## Revendications

1. Installation de convoyeurs à bande avec une bande transporteuse (1) et un dispositif destiné à étanchéifier les zones latérales (1.2, 1.3) de la bande transporteuse (1), sachant que, des deux côtés de l'axe longitudinal de la bande transporteuse (1), est disposée une succession d'éléments d'étanchéité, qui, distancés les uns des autres par un intervalle (A), sont orientés vers la surface de la bande transporteuse (1), sachant que les éléments d'étanchéité individuels sont réalisés en forme de raies, disposées en biais par rapport à l'axe longitudinal de la bande transporteuse et que leurs extrémités intérieures sont orientées dans le sens de marche (F) de la bande transporteuse, sachant que les éléments d'étanchéité individuels sont réalisés en forme de barres de guidage étroites (6), la relation entre la largeur (B) de la barre de guidage (6) respective et l'intervalle (A) de deux des barres de guidage (6), qui limitent l'espace intermédiaire (13), étant supérieur à 1 : 3, sachant que, le long du bord latéral respectif de la bande transporteuse (1), s'étend une barre de bordure (14), qui relie les extrémités extérieures des barres de guidage (6), disposées à cet endroit, de sorte que l'espace intermédiaire (13), situé entre les barres de guidage (6), soit fermé vers l'extérieur par rapport à la zone du bord de la bande transporteuse, **caractérisé en ce que** la barre de bordure (14) est fabriquée à partir d'un matériau présentant l'élasticité du caoutchouc et est dotée d'au moins un moyen de réglage (15) destiné à régler la distance (D) par rapport à la surface de la bande transporteuse (1), de sorte que la barre de bordure (14) puisse être disposée, en suspension au-dessus de la bande transporteuse (1), à une distance (D) de l'ordre de 1,0 mm à 10 mm, sachant que les barres de guidage (6) sont dimensionnées par rapport aux barres de bordure (14) de sorte qu'elles puissent être disposées à faible distance de la bande transporteuse (1), en suspension au-dessus de la bande transporteuse (1).

2. Installation de convoyeurs à bande selon la revendication 1, **caractérisé en ce que** le moyen de réglage (15) est réalisé en tant que bande de serrage.

3. Installation de convoyeurs à bande selon revendication 1 ou 2, **caractérisé en ce que** le moyen de réglage (15) est un moyen de réglage destiné à régler en continu la distance (D) entre la barre de bordure (14) et la surface de la bande transporteuse (1).

4. Installation de convoyeurs à bande selon l'une des revendications 1 à 3, **caractérisé en ce que** les barres de guidage (6) sont disposées, en suspension au-dessus de la bande transporteuse (1), à une distance (D) de l'ordre de 1,0 mm à 10 mm de la surface de la bande transporteuse (1).

5. Installation de convoyeurs à bande selon l'une des revendications 1 à 4, **caractérisé en ce que** la barre de bordure (14) présente une largeur (B2) qui représente un multiple de la largeur (B) de la barre de guidage (6) respective.

6. Installation de convoyeurs à bande selon l'une des revendications 1 à 5, **caractérisé en ce que** les bords longitudinaux des barres de guidage (6), orientées vers la bande transporteuse (1), affleurent avec le bord longitudinal, orienté vers la bande transporteuse (1), de la barre de bordure (14), qui relie les extrémités extérieures de ces barres de guidage (6).

7. Installation de convoyeurs à bande selon l'une des revendications 1 à 6, **caractérisé en ce que** les barres de guidage (6) sont fabriquées à partir d'un matériau qui présente l'élasticité du caoutchouc.

8. Installation de convoyeurs à bande selon revendication 1 ou 7, **caractérisé en ce que** le matériau présentant l'élasticité du caoutchouc est doté d'une dureté shore inférieure à 80 shore A, de préférence inférieure à 60 shore A.

9. Installation de convoyeurs à bande selon revendication 1, 7 ou 8, **caractérisé en ce que** le matériau présentant l'élasticité du caoutchouc est antistatique et / ou auto-extinguible.

10. Installation de convoyeurs à bande selon l'une des revendications 1 à 9, **caractérisé en ce que** la barre de bordure (14) est pourvue d'au moins un élément de rigidification allongé, plastiquement déformable.

11. Installation de convoyeurs à bande selon la revendication 10, **caractérisé en ce que** l'élément de rigidification est incorporé ou coulé dans la barre de bordure (14).
